(19) **Europäisches Patentamt**

**European Patent Office**

**Office européen des brevets**

(11) **EP 0 883 523 B1**

(12) **EUROPÄISCHE PATENTSCHRIFT**

(45) Veröffentlichungstag und Bekanntmachung des Hinweises auf die Patenterteilung:
**12.01.2000 Patentblatt 2000/02**

(21) Anmeldenummer: **96945819.9**

(22) Anmeldetag: **17.10.1996**

(51) Int. Cl.$^7$: **B60R 21/13**

(86) Internationale Anmeldenummer:
**PCT/DE96/02001**

(87) Internationale Veröffentlichungsnummer:
**WO 97/33775 (18.09.1997 Gazette 1997/40)**

(54) **ANORDNUNG ZUM ERKENNEN VON ÜBERROLLVORGÄNGEN BEI FAHRZEUGEN**

ARRANGEMENT FOR DETECTING MOTOR-VEHICLE ROLL-OVERS

PROCEDE ET DISPOSITIF POUR DETECTER LE CAPOTAGE D'UN VEHICULE

(84) Benannte Vertragsstaaten:
**DE FR SE**

(30) Priorität: **13.03.1996 DE 19609717**

(43) Veröffentlichungstag der Anmeldung:
**16.12.1998 Patentblatt 1998/51**

(73) Patentinhaber: **ROBERT BOSCH GMBH**
**70442 Stuttgart (DE)**

(72) Erfinder:
• **BREUNIG, Volker**
  **D-74078 Heilbronn (DE)**
• **BAUER, Joachim**
  **D-71720 Oberstenfeld (DE)**
• **LANG, Hans-Peter**
  **I-20150 Milano (IT)**

(56) Entgegenhaltungen:
| | |
|---|---|
| **EP-A- 0 528 514** | **EP-A- 0 662 601** |
| **EP-A- 0 709 255** | **WO-A-96/09193** |
| **DE-C- 3 825 088** | **DE-C- 4 436 162** |
| **FR-A- 2 340 216** | |

• **PATENT ABSTRACTS OF JAPAN vol. 018, no. 478 (P-1796), 6.September 1994 & JP 06 160525 A (OLYMPUS OPTICAL CO LTD), 7.Juni 1994,**

**Beschreibung**

Stand der Technik

Die vorliegende Erfindung betrifft eine Anordnung zum Erkennen von Überrollvorgängen bei Fahrzeugen gemäß den Merkmalen des Oberbegriffs des Anspruchs 1 bzw. 2.

Falls es zu einem Überschlag eines Fahrzeugs kommt, müssen rechtzeitig alle im Fahrzeug installierten Insassen-Schutzvorrichtungen ausgelöst werden, dazu gehören beispielsweise Überrollbügel, Gurtstraffer, Front- und Seitenairbags, Schwingsitzarretierung bei einem LKW, etc. Damit all diese Schutzvorrichtungen rechtzeitig ausgelöst werden können, muß möglichst früh erkannt werden, ob Drehungen des Fahrzeugs um seine Hochachse (Gierachse), seine Längsachse (Wankachse) und seine Querachse (Nickachse) zu einem Überschlag führen werden. Damit die Insassenschutzvorrichtungen auch wirklich nur bei einem Überschlag ausgelöst werden, sollten Fehlerkennungen von Überschlägen möglichst weitgehend ausgeschlossen werden.

Aus der DE 36 04 216 C2 ist ein Überrollsensor bekannt, bestehend aus einem mit einem Fluid gefüllten Raum, in dem sich als seismische Masse ein nach Art eines Pendels aufgehängter Körper befindet. Aus der Lageänderung des Pendels, das in allen Richtungen ausschlagen kann, wird mit Hilfe einer elektrischen Auswerteschaltung eine Information darüber gewonnen, ob das Fahrzeug sich überschlägt oder nicht. Dieser auf dem Pendelprinzip beruhende Überrollsensor hat den Nachteil, daß er einerseits zu träge auf die Fahrzeugbewegungen reagiert, so daß eventuell ein Überschlag zu spät für das Auslösen der Insassenschutzvorrichtungen signalisiert wird, und andererseits durch Resonanzschwingungen der seismischen Masse einen Überrollvorgang vortäuschen kann.

Aus der gattungsbildenden EP 0 430 813 A1 ist ein System zur Überrollerkennung von Fahrzeugen bekannt, das einen Drehratensensor und drei Beschleunigungssensoren aufweist. Der Drehratensensor mißt die Winkelgeschwindigkeit um die Wankachse des Fahrzeugs, und die drei Beschleunigungssensoren messen die Beschleunigung des Fahrzeugs in Richtung seiner Längsachse, seiner Querachse und seiner Hochachse. Aus der gemessenen Winkelgeschwindigkeit und den gemessenen Beschleunigungen werden drei Größen hergeleitet, die jeweils einer Schwellwertscheidung unterzogen werden. Sobald eine der drei Größen die ihm vorgegebene Schwelle übersteigt, wird entschieden, daß es zu einem Überrollen des Fahrzeugs kommt.

Der Erfindung liegt die Aufgabe zugrunde, eine Anordnung zum Erkennen eines Fahrzeug-Überschlags anzugeben, womit ein Überschlag rechtzeitig und mit großer Zuverlässigkeit erkannt wird.

Gemäß den Merkmalen des Anspruchs 1 wird die Aufgabe dadurch gelöst, daß drei Drehratensensoren vorhanden sind, welche die Winkelgeschwindigkeiten des Fahrzeugs um die Gierachse, die Wankachse und die Nickachse messen. Zudem sind Mittel vorhanden, welche aus den gemessenen Winkelgeschwindigkeiten die Lage eines in eine horizontale Ebene projizierten, fahrzeugfesten Punktes (z.B. Fahrzeugschwerpunkt) ermitteln, und sie signalisieren ein Überrollen des Fahrzeugs, wenn der projizierte Punkt die Grenzen einer ebenfalls in die horizontale Ebene projizierten fahrzeugfesten Fläche überschreitet.

Gemäß dem nebengeordneten Anspruch 2 wird aus den drei gemessenen Winkelgeschwindigkeiten die Rotationsenergie des Fahrzeugs berechnet und dann ein Überrollen des Fahrzeugs signalisiert, wenn die Rotationsenergie eine Schwelle überschreitet. Dabei ist die Schwelle diejenige potentielle Energie, die erforderlich ist, um das Fahrzeug aus seiner momentanen Lage in eine Lage zu kippen, in der ein fahrzeugfester Punkt seinen gegenüber der Fahrbahnebene maximalen Abstand erreicht. Auf diese Weise läßt sich ein Überrollen des Fahrzeugs sehr frühzeitig prognostizieren, so daß sehr viel Zeit bleibt, um Sicherheitsvorrichtungen im Fahrzeug auszulösen.

Beschreibung von Ausführungsbeispielen

Anhand zweier in der Zeichnung dargestellter

Ausführungsbeispiele wird nachfolgend die Erfindung näher erläutert. Es zeigen:

Figur 1 eine schematische Darstellung eines Fahrzeugs mit einer Geometrie zur Berechnung der Kipplage des Fahrzeugs nach einer ersten Art,
Figur 2 eine schematische Darstellung eines Fahrzeugs mit einer Geometrie zur Berechnung seiner Kipplage nach einer zweiten Art und
Figur 3 ein Ablaufdiagramm für die Ermittlung einer Überroll-Information.

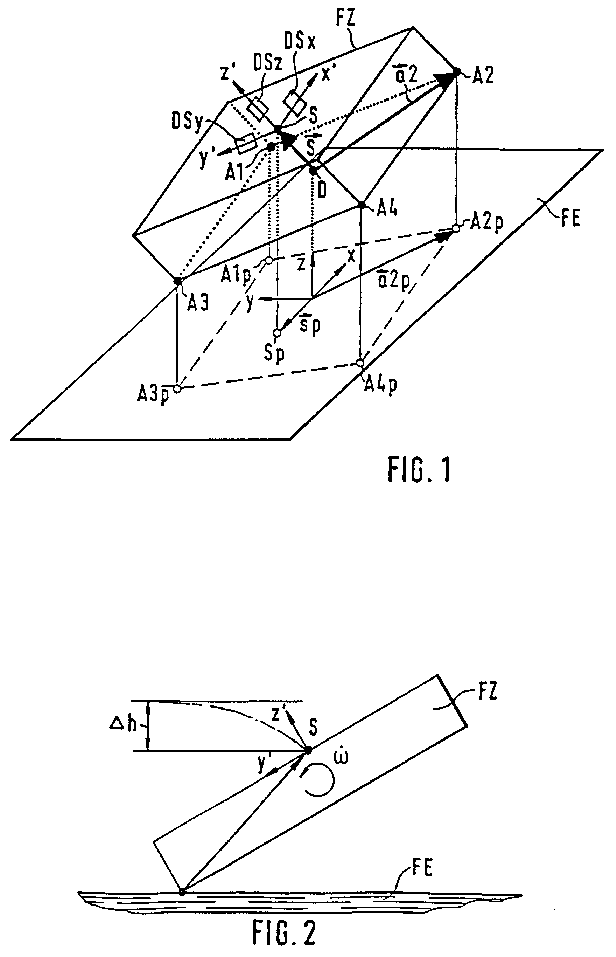

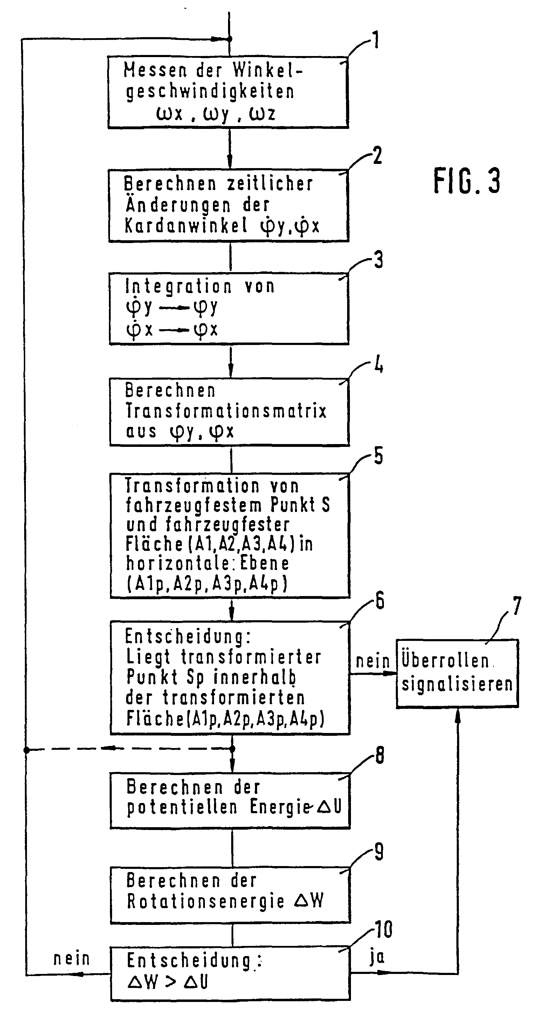

In der Figur 1 ist schematisch ein Fahrzeug FZ dargestellt, das sich über einer horizontalen Ebene FE, vorzugsweise der Fahrbahnebene, in einer Kipplage befindet. Im Fahrzeug sind Drehratensensoren $DS_x$, $DS_y$ und $DS_z$ installiert, welche die winkelgeschwindigkeiten $\omega_x$, $\omega_y$ und $\omega_z$ um die Wankachse x', die Nickachse y' und die Gierachse z' messen. Das Zentrum des fahrzeugeigenen Koordinatensystems x', y', z' ist ein fiktiv gewählter fahrzeugfester Punkt S, vorzugsweise des Fahrzeugschwerpunktes. Gemäß dem in Figur 3 dargestellten Ablaufdiagramm wird die Messung der Winkelgeschwindigkeiten $\omega_x$, $\omega_y$, $\omega_z$ in dem Verfahrensschritt 1 durchgeführt.

Im Verfahrensschritt 2 werden aus den Winkelgeschwindigkeiten $\omega_x$, $\omega_y$ und $\omega_z$ gemäß Gleichung (1) die zeitlichen Änderungen $\varphi_x$ und $\varphi_y$ der Kardanwinkel $\varphi_x$ und $\varphi_y$ bezüglich der Wankachse x' und der Nick-

achse y' berechnet:

$$\begin{pmatrix} \dot{\varphi}y \\ \dot{\varphi}x \end{pmatrix} = \begin{pmatrix} 0 & \cos \varphi y & -\sin \varphi x \\ 1 & \tan \varphi y \sin \varphi x & \tan \varphi y \cos \varphi x \end{pmatrix} \begin{pmatrix} \omega x \\ \omega y \\ \omega z \end{pmatrix} \quad (1)$$

Der Kardanwinkel φz wird nicht benötigt, weil Gieren des Fahrzeugs für das Überrollen nicht relevant ist. Durch Integration der zeitlichen Änderungen der Kardanwinkel φx und φy werden im Verfahrensschritt 3 die Kardanwinkel φx und φy berechnet. Aus den Kardanwinkeln φx und φy wird im Verfahrensschritt 4 die in Gleichung (2) angegebene Transformationsmatrix T berechnet:

$$T = \begin{pmatrix} \cos \varphi y & \sin \varphi x \cdot \sin \varphi y & \cos \varphi x \cdot \sin \varphi y \\ 0 & \cos \varphi x & -\sin \varphi x \\ -\sin \varphi y & \sin \varphi x \cdot \cos \varphi y & \cos \varphi x \cdot \cos \varphi y \end{pmatrix} \quad (2)$$

Für die weiteren Berechnungen wird neben dem bereits oben erwähnten Fahrzeugschwerpunkt S eine fahrzeugfeste Fläche vorgegeben. Diese fahrzeugfeste Fläche ist in der Figur 1 zwischen den Punkten A1, A2, A3 und A4 aufgespannt, wobei diese Punkte beispielsweise die Radaufstandspunkte des Fahrzeugs sein können. Die Koordinaten der Punkte A1, A2, A3 und A4 bezüglich des fahrzeugeigenen Koordinatensystems (x', y', z') lassen sich durch Vektoren beschreiben, welche von einem in der Fläche liegenden Punkt D ausgehen. In der Figur 1 ist beispielhaft der Vektor ā2 vom Punkt D zum Eckpunkt A2 angegeben. Diese vom Punkt D zu den Eckpunkten A1, A2, A3 und A4 gehenden Vektoren besitzen nur x'- und y'-Komponenten, weil deren Ausgangspunkt D durch Projektion des Koordinatenschnittpunktes S auf die zwischen den Punkten A1, A2, A3, A4 aufgespannte Fläche entstanden ist. Der Vektor s̄ vom Punkt D zum Punkt S hat nur eine z'-Komponente. Durch diese Wahl der Vektoren s̄ und āi (i = 1, 2, 3, 4) gibt es ein Minimum an Vektorkomponenten, wodurch sich alle weiteren Berechnungen stark vereinfachen.

Durch die im Verfahrensschritt 5 mittels der zuvor berechneten Transformationsmatrix T ausgeführte Transformation der zwischen den Eckpunkten A1, A2, A3 und A4 aufgespannten fahrzeugfesten Fläche und des fahrzeugfesten Punktes S werden sowohl die fahrzeugfeste Fläche (A1, A2, A3, A4) und der fahrzeugfeste Punkt S in eine horizontale Ebene (Parallelebene zur Fahrzeugebene) projiziert. Dabei entsteht in der horizontalen Ebene eine strichliert umrandete Fläche, welche zwischen den zu den Punkten A1, A2, A3, A4 gehörenden Projektionspunkten A1p, A2p, A3p, A4p aufgespannt ist. In derselben horizontalen Ebene liegt auch der zum fahrzeugfesten Punkt S gehörende Projektionspunkt Sp. Der auf die horizontale Ebene projizierte Punkt D bildet den Ursprung eines Koordinatensystems mit den Achsen x, y und z, wobei die z-Achse in Projektionsrichtung liegt. Die vom Ursprung dieses Koordinatensystems x, y, z ausgehenden und zu den Eckpunkten A1p, A2p, A3p und A4p der projizierten Fläche führenden Vektoren āip (i = 1, 2, 3, 4) gehen aus der Multiplikation der entsprechenden Vektoren āi des fahrzeugeigenen Koordinatensystems mit der Transformationsmatrix T gemäß Gleichung (2) hervor. Ebenso wird der den Ort des projizierten Punktes Sp beschreibende Vektor s̄p durch Multiplikation der Transformationsmatrix T mit dem Vektor s̄ in dem fahrzeugeigenen Koordinatensystem gebildet. Mit Hilfe der Vektoren āip und s̄p läßt sich im Verfahrensschritt 6 entscheiden, ob der Punkt Sp innerhalb oder außerhalb der zwischen den Punkten A1p, A2p, A3p und A4p aufgespannten Fläche liegt. Liegt der Punkt Sp außerhalb dieser Fläche, so kommt es mit Sicherheit zu einem überrollen des Fahrzeugs. Dementsprechend wird in einem Verfahrensschritt 7 ein Überrollen signalisiert, wodurch die Insassenschutzeinrichtungen ausgelöst werden.

Der Figur 3 ist zu entnehmen, daß sich an den Verfahrensschritt 6 noch drei weitere Verfahrensschritte 8, 9 und 10 anschließen. In diesen drei Verfahrensschritten 8, 9 und 10 wird ein Kriterium für ein Überrollen nach einer anderen Methode abgeleitet. Diese Verfahrensschritte sind entweder, wie in der Figur 3 dargestellt, an das zuvor beschriebene Berechnungsverfahren angehängt oder sie werden allein ohne das andere Verfahren oder parallel zu dem anderen Verfahren durchgeführt.

Im Verfahrensschritt 8 wird eine potentielle Energie ΔU berechnet, welche erforderlich ist, um das Fahrzeug aus seiner momentanen Lage in eine instabile Lage zu bringen, aus der heraus sich das Fahrzeug überschlägt. Wie in der Figur 2 verdeutlicht worden ist, müßte der fahrzeugfeste Punkt S aus der dargestellten momentanen Lage seinen Abstand gegenüber der horizontalen Ebene FE um einen Betrag Δh vergrößern. Dann hätte nämlich der fahrzeugfeste Punkt seinen maximalen Abstand gegenüber der horizontalen Ebene FE erreicht. Würde das Fahrzeug sich soweit drehen, daß der fahrzeugfeste Punkt diesen maximalen Abstand gegenüber der horizontalen Ebene FE erreicht, so käme es unweigerlich zu einem Überrollen des Fahrzeugs. Die potentielle Energie ΔU wird im Verfahrensschritt 8 gemäß Gleichung (3) berechnet:

$$\Delta U = mg\Delta h \quad (3)$$

Dabei ist m die bekannte Masse des Fahrzeugs und g die Erdbeschleunigung. Die Differenz Δh zwischen dem momentanen Abstand des fahrzeugfesten Punktes S gegenüber der horizontalen Ebene FE und dem besagten maximalen Abstand kann durch einfache geometrische Berechnungen aus den Fahrzeugabmessungen und der zuvor bereits berechneten Transformationsmatrix T ermittelt werden. Im nächsten Verfahrensschritt wird die Rotationsenergie ΔW des Fahrzeugs gemäß Gleichung (4) berechnet:

$$\Delta W = \frac{1}{2}\,\Theta\,\omega^2 \qquad (4)$$

Dabei ist mit Θ das Massenträgheitsmoment des Fahrzeugs bezeichnet, und ω ist eine mit den Drehratensensoren gemessene Winkelgeschwindigkeit um eine Fahrzeugachse. Im Verfahrensschritt 6 wird entschieden, ob die Rotationsenergie ΔW größer ist als die potentielle Energie ΔU. Ist das der Fall, so wird es mit Sicherheit zu einem Überrollen des Fahrzeugs kommen. Dementsprechend wird ein Überrollen signalisiert, so daß die Insassenschutzeinrichtungen ausgelöst werden können.

Durch die in den Verfahrensschritten 8, 9 und 10 angewandte Energiebetrachtung kann frühzeitig ein Überrollen des Fahrzeugs prognostiziert werden, so daß rechtzeitig vor dem tatsächlichen Überrollen die Insassenschutzeinrichtungen ausgelöst werden können.

## Patentansprüche

1. Anordnung zum Erkennen von Überrollvorgängen bei Fahrzeugen mit Hilfe mehrerer Sensoren, von denen einer ein Drehratensensor (Dsx) ist, der die Winkelgeschwindigkeit des Fahrzeugs (FZ) um die Wankachse (x') mißt, dadurch gekennzeichnet, daß zwei weitere Drehratensensoren (Dsy, Dsz) vorhanden sind, welche die Winkelgeschwindigkeiten des Fahrzeugs (FZ) um die Gierachse (z') und die Nickachse (y') messen, und daß Mittel vorhanden sind, welche aus den gemessenen Winkelgeschwindigkeiten die Lage eines in eine horizontale Ebene projizierten fahrzeugfesten Punktes (Sp) bestimmen, und daß diese Mittel, wenn der projizierte Punkt (Sp) die Grenzen einer ebenfalls in die horizontale Ebene projizierten fahrzeugfesten Fläche (A1p, A2p, A3p, A4p) überschreitet, ein Überrollen des Fahrzeugs (FZ) signalisieren.

2. Anordnung zum Erkennen von überrollvorgängen bei Fahrzeugen mit Hilfe mehrerer Sensoren, von denen einer ein Drehratensensor (Dsx) ist, der die Winkelgeschwindigkeit des Fahrzeugs (FZ) um die Wankachse (x') mißt, dadurch gekennzeichnet, daß zwei weitere Drehratensensoren (Dsy, Dsz) vorhanden sind, welche die Winkelgeschwindigkeiten des Fahrzeugs (FZ) um die Gierachse (z') und die Nickachse (y') messen, und daß Mittel vorhanden sind, welche aus den Winkelgeschwindigkeiten die Rotationsenergie des Fahrzeugs berechnen und ein Überrollen des Fahrzeugs (FZ) signalisieren, wenn die Rotationsenergie eine Schwelle überschreitet, wobei diese Schwelle diejenige potentielle Energie ist, die erforderlich ist, um das Fahrzeug (FZ) aus seiner momentanen Lage in eine Lage zu kippen, in der ein fahrzeugfester Punkt (S) seinen gegenüber der Fahrbahnebene (FE) maximalen Abstand erreicht.

## Claims

1. Arrangement for detecting rollover processes in motor vehicles with the aid of a plurality of sensors of which one is a rotation rate sensor (Dsx) which measures the angular speed of the vehicle (FZ) about the roll axis (x'), characterized in that two further rotation rate sensors (Dsy, Dsz) are present which measure the angular speeds of the vehicle (FZ) about the yaw axis (z') and the pitch axis (y'), and in that means are present which determine from the measured angular speeds the position of a point (Sp), fixed in the vehicle, projected onto a horizontal plane, and in that these means signal rolling over of the vehicle (FZ) when the projected point (Sp) transgresses the boundaries of an area (A1p, A2p, A3p, A4p), fixed in the vehicle, likewise projected onto the horizontal plane.

2. Arrangement for detecting rollover processes in motor vehicles with the aid of a plurality of sensors of which one is a rotation rate sensor (Dsx) which measures the angular speed of the vehicle (FZ) about the roll axis (x'), characterized in that two further rotation rate sensors (Dsy, Dsz) are present which measure the angular speeds of the vehicle (FZ) about the yaw axis (z') and the pitch axis (y'), and in that means are present which calculate the rotational energy of the vehicle from the angular speeds and signal rolling over of the vehicle (FZ) when the rotational energy exceeds a threshold, this threshold being that potential energy which is required in order to tip the vehicle (FZ) from its instantaneous position into a position in which a point (S) fixed in the vehicle reaches its maximum distance from the roadway plane (FE).

## Revendications

1. Dispositif pour reconnaître des opérations de capotage de véhicule à l'aide de plusieurs capteurs dont l'un est un capteur de vitesse de rotation (Dsx) qui mesure la vitesse angulaire du véhicule (FZ) autour de l'axe de tangage (x'), caractérisé par

   - deux autres capteurs de vitesse de rotation (Dsy, Dsz) mesurant les vitesses angulaires du véhicule (FZ) autour de l'axe de giration (z') et de l'axe de basculement (y'), et
   - des moyens qui, partant des vitesses angulaires mesurées, déterminent la position d'un point (Sp) appartenant au véhicule et projeté dans un plan horizontal, et

- si le point (Sp) projeté dépasse les limites d'une surface (A1p, A2p, A3p, A4p) appartenant au véhicule et qui est également projetée dans le plan horizontal, ces moyens signalent le capotage du véhicule (FZ).

2. Dispositif pour détecter des opérations de capotage d'un véhicule à l'aide de plusieurs capteurs dont l'un est un capteur de vitesse de rotation (Dsx) mesurant la vitesse angulaire du véhicule (FZ) autour de l'axe de tangage (x'), caractérisé par

- deux autres capteurs de vitesse de rotation (Dsy, Dsz) qui mesurent les vitesses angulaires du véhicule (FZ) autour de l'axe de giration (z') et de l'axe de basculement (y')'
- des moyens qui, à partir des vitesses angulaires, calculent l'énergie de rotation du véhicule et signalent un capotage du véhicule (FZ) si l'énergie de rotation dépasse un seuil,
- le seuil étant l'énergie potentielle nécessaire pour faire basculer le véhicule (FZ) de sa position instantanée dans une position dans laquelle un point (S) solidaire du véhicule atteint sa vitesse maximale par rapport au plan de la chaussée (FE).

FIG. 1

FIG. 2

FIG.3

1 — Messen der Winkelgeschwindigkeiten
$\omega_x$, $\omega_y$, $\omega_z$

2 — Berechnen zeitlicher
Änderungen der
Kardanwinkel $\dot{\varphi}_y$, $\dot{\varphi}_x$

3 — Integration von
$\dot{\varphi}_y \longrightarrow \varphi_y$
$\dot{\varphi}_x \longrightarrow \varphi_x$

4 — Berechnen
Transformationsmatrix
aus $\varphi_y$, $\varphi_x$

5 — Transformation von
fahrzeugfestem Punkt S
und fahrzeugfester
Fläche (A1,A2,A3,A4) in
horizontale Ebene
(A1p,A2p,A3p,A4p)

6 — Entscheidung:
Liegt transformierter
Punkt Sp innerhalb
der transformierten
Fläche (A1p,A2p,A3p,A4p)

nein →

7 — Überrollen
signalisieren

8 — Berechnen der
potentiellen Energie $\Delta U$

9 — Berechnen der
Rotationsenergie $\Delta W$

10 — Entscheidung:
$\Delta W > \Delta U$

nein    ja